# EUROPÄISCHE PATENTSCHRIFT

(11) **EP 2 293 963 B1**
(45) Veröffentlichungstag und Bekanntmachung des Hinweises auf die Patenterteilung: **13.02.2013**
(21) Anmeldenummer: 09801184.4
(22) Anmeldetag: 07.12.2009
(51) Int. Cl.: B60R 21/203, B60Q 5/00

(54) **LENKRADBAUGRUPPE FÜR EIN KRAFTFAHRZEUG**
STEERING WHEEL ASSEMBLY FOR A MOTOR VEHICLE
ENSEMBLE VOLANT D'UN VÉHICULE AUTOMOBILE

(30) Priorität: 05.12.2008 DE 202008017216 U; 05.12.2008 DE 102008060821; 22.12.2008 DE 102008064581
(43) Veröffentlichungstag der Anmeldung: 16.03.2011
(73) Patentinhaber: Takata AG, 63743 Aschaffenburg (DE)
(72) Erfinder: MAROTZKE, Thomas, 16562 Bergfelde (DE)
(74) Vertreter: Baumgärtel, Gunnar
(86) Internationale Anmeldenummer: PCT/EP2009/066532
(87) Internationale Veröffentlichungsnummer: WO 2010/063849

(56) Entgegenhaltungen:
- DE-A1- 19 503 816
- DE-A1- 19 927 032
- DE-A1-102006 037 672
- US-A- 5 380 037
- US-A1- 2006 197 323

## Beschreibung

Die Erfindung betrifft eine Lenkradbaugruppe für ein Kraftfahrzeug nach dem Oberbegriff des Anspruchs 1.

Eine derartige Lenkradbaugruppe umfasst ein (um eine Lenkachse) drehbar an einem Kraftfahrzeug zu lagerndes Lenkrad mit zumindest einer in einer vorgegebenen Gebrauchsposition am Lenkrad angeordneten Funktionskomponente in Form eines Airbagmoduls.

DE 10 2006037672 offenbart eine Lenkradbaugruppe nach dem Oberbegriff des Anspruchs 1.

Es ist bekannt, an Lenkrädern zusätzliche Funktionskomponenten anzuordnen, die nicht unmittelbar der Lenkung eines Kraftfahrzeugs dienen sondern zusätzliche Aufgaben übernehmen, darunter ein Airbagmodul, das zum Schutz eines Fahrers des Kraftfahrzeugs in einem Crash-Fall dient und das außerdem (optional) zum Auslösen einer Hupenfunktion des Kraftfahrzeugs vorgesehen sein kann, indem durch (manuelle) Druckausübung auf die dem Fahrer zugewandte Oberseite des Airbagmoduls eingewirkt wird.

Bei dem am Lenkrad angeordneten Airbagmodul kann es zweckmäßig oder gar erforderlich sein, dieses durch mindestens einen (gegebenenfalls umlaufenden) Spalt von weiteren Bereichen des Lenkrades zu trennen, um bestimmte Designeffekte zu erzielen und/oder um eine gewünschte Bewegung des Airbagmoduls bei dessen Betätigung zu ermöglichen - z.B. im Fall der erwähnten Hupenfunktion eine Bewegung des Airbagmodules entlang der Lenkachse bei Einwirkung über die Hand eines Fahrzeuginsassen, wobei ein am äußeren Rand des Airbagmodules umlaufender Spalt zugleich auch ein gewisses Verkippen des Airbagmodules (als Folge unsymmetrischer Krafteinleitung) zulässt.

Bei einer derartigen Lenkradbaugruppe ist es wichtig, das hieran angeordnete Airbagmodul korrekt in einer vorgegebenen Gebrauchsposition am Lenkrad zu positionieren, z.B., damit die Spaltmaße eines das Airbagmodul vom Lenkrad trennenden Spaltes ihre vorgesehenen Werte einnehmen.

Der Erfindung liegt das Problem zugrunde, eine Lenkradbaugruppe der eingangs genannten Art zu schaffen, die eine zuverlässige, genaue Positionierung der zugeordneten Funktionskomponente am Lenkrad zulässt.

Dieses Problem wird erfindungsgemäß durch die Schaffung einer Lenkradbaugruppe mit den Merkmalen des Anspruchs 1 gelöst.

Danach ist an der Lenkradbaugruppe eine Verstelleinrichtung angeordnet, die dazu ausgebildet und vorgesehen ist, die räumliche Lage des Airbagmoduls relativ zum Lenkrad quer zur Lenkachse, also insbesondere entlang einer senkrecht zur Lenkachse verlaufenden Ebene, zu verstellen, um hierdurch bei der Positionierung des Airbagmoduls am Lenkrad Toleranzen ausgleichen zu können und somit das Airbagmodul präzise in seiner Gebrauchsposition anordnen zu können.

Bei der Gebrauchsposition handelt es sich um diejenige Position einer Funktionskomponente, hier eines Airbagmoduls, am Lenkrad, die jene Funktionskomponente nach bestimmungsgemäßem Einbau in ein Lenkrad einnehmen und sodann beibehalten soll, also hier die bestimmungsgemäße Einbaulage eines Airbagmodules im zentralen Bereich eines Lenkrades.

Vorliegend umfasst die Verstelleinrichtung Einstellmittel, mittels derer eine Verstellkraft erzeugbar ist, die zumindest eine Kraftkomponente entlang der Verstellrichtung des Airbagmoduls aufweist, und darüber hinaus eine Führungseinrichtung, mit der das Airbagmodul entlang seiner Verstellrichtung geführt ist.

Zur definierten Anordnung des Airbagmoduls am Lenkrad kann an letzterem eine entsprechende Aufnahme, z. B. in Form einer Ausnehmung, vorgesehen sein.

Die dem Airbagmodul zugeordnete Verstelleinrichtung kann dazu ausgebildet und vorgesehen sein, einen entlang der senkrecht zur Lenkachse erstreckten Ebene verlaufenden Spalt zwischen dem Rand der besagten Ausnehmung und dem Airbagmodul zu justieren, z.B. einen umlaufenden Spalt. Die Justage kann insbesondere zu dem Zweck erfolgen, dass die Breite zweier einander gegenüberliegender Abschnitte eines Spaltes gleich groß wird.

Das Airbagmodul kann ein Trägerelement aufweisen, welches Bestandteile (TeilKomponenten) jdes Airbagmoduls trägt.

Zum Verstellen des Airbagmoduls (senkrecht zur Lenkachse) kann die Verstelleinrichtung ein von einem (Träger-)Element des Airbagmoduls oder von einem sonstigen Bestandteil der Lenkradbaugruppe, insbesondere von einer Lenkradnabe oder einer Kontaktbrücke, abragendes Exzenterbauteil (z.B. einen Exzenterstift) aufweisen, das mit einem (freien) Ende in eine Öffnung eines von dem besagten (Träger-)Element bzw. von dem besagten sonstigen Bestandteil der Lenkradbaugruppe verschiedenen Bauteiles der Lenkradbaugruppe eingreift, so dass das Airbagmodul durch Drehen des Exzenterbauteiles (Exzenterstiftes) relativ zu jenem Bauteil der Lenkradbaugruppe verstellt wird. Hierzu kann ein Exzenterstift insbesondere formschlüssig in die zugeordnete Öffnung eingreifen, welche hierfür auch als ein Langloch ausgebildet sein kann.

Das Exzenterbauteil wird nachfolgend kurz als Exzenter bezeichnet.

Gemäß einer Ausführungsform weist der Exzenter (Exzenterstift) einen zentrischen Abschnitt (Exzenterkörper) und einen hiervon abragenden, hierzu versetzten exzentrischen Abschnitt auf, die in dem besagten Bauteil der Lenkradbaugruppe jeweils in einer eigenen Ebene geführt sind, wobei die beiden Ebenen parallel zueinander verlaufen. Hierbei kann weiterhin in jeder der beiden Ebenen eine Öffnung, z. B. in Form je eines Langlochs, vorgesehen sein, um den zentrischen Abschnitt und den davon abragenden exzentrischen Abschnitt des Exzenters (Exzenterstiftes) in je einer Ebene zu führen. Die Längsachsen der beiden Langlöcher können dabei insbesondere quer zueinander verlaufen.

Gemäß einer weiteren Ausführungsform weist die Verstelleinrichtung zum Verstellen des Airbagmoduls mindestens einen von einem (Träger-)Element des Airbagmoduls oder von einem sonstigen Bestandteil der Lenkradbaugruppe abragenden Stift auf, der mit einem (freien) Ende in eine Exzenterbuchse eines von jenem (Träger-)Element bzw. jenem Bestandteil der Lenkradbaugruppe verschiedenen Bauteils der Lenkradbaugruppe eingreift, so dass das Airbagmodul bei einem Drehen der Exzenterbuchse gegenüber jenem Teil der Lenkradbaugruppe verstellt werden kann.

Weiterhin kann zur Bildung der Führungseinrichtung von einem (Träger-)Element des Airbagmoduls oder von einem sonstigen Bestandteil der Lenkradbaugruppe ein Führungselement (Führungsstift) abragen, der beispielsweise (mit einem freien Ende) in eine Führungskulisse (z.B. ein Langloch) eines von dem (Träger-)Element bzw. dem sonstigen Bestandteil der Lenkradbaugruppe verschiedenen Bauteiles der Lenkradbaugruppe eingreift.

Das letztgenannte Bauteil der Lenkradbaugruppe kann beispielsweise durch eine Lenkradnabe (als ein von dem Trägerelement verschiedenes Bauteil der Lenkradbaugruppe) oder durch eine Kontaktbrücke (als ein von der Lenkradnabe verschiedenes Bauteil der Lenkradbaugruppe) gebildet werden.

Die Führungseinrichtung definiert eine Führungsbahn, mittels der dem Airbagmodul bei Betätigung der Einstellmittel eine Bewegung (in Verlaufsrichtung der Führungsbahn) aufgezwungen wird, wobei die Führungseinrichtung insbesondere zusätzlich zu den Einstellmitteln vorgesehene Komponenten umfasst.

Ferner können der Verstelleinrichtung Verriegelungsmittel zugeordnet sein, mit denen die Verstelleinrichtung in einer jeweiligen Einstellposition arretierbar ist, z.B. indem die Verriegelungsmittel zur Arretierung einer Drehlage eines als Einstellmittel dienenden Exzenters vorgesehen sind bzw. an einem Gewindestück des Exzenters ausgebildet sind, insbesondere durch eine Schwergängigkeit oder eine selbsthemmende Ausbildung des Gewindes.

Bei dem als zu verstellende Funktionskomponente der Lenkradbaugruppe vorgesehenen Airbagmodul kann es insbesondere um ein Airbagmodul handeln, das zum Auslösen einer Hupenfunktion (entlang der Lenkachse) begrenzt beweglich gelagert ist.

Weiterhin kann die erfindungsgemäße Anordnung auch zur Verstellung bzw. Positionierung eines Bedienelementes des Lenkrades, wie z.B. eines Schalters oder Tasters, oder eines Designelement des Lenkrades, wie z.B. einer Blende zur Abdeckung eines Lenkradkranzes oder von Speichen des Lenkrades, verwendet werden. In dem erstgenannten Fall wird unter einer Verstellung des Bedienelementes nicht das Einstellen unterschiedlicher Bedienstellungen, wie z. B. unterschiedlicher Schalterstellungen eines Schalters, verstanden. Vielmehr geht es hier um die Einstellung der Gebrauchslage des Bedienelementes insgesamt zu Zwecken des Toleranzausgleiches. Insbesondere kann die Verstelleinrichtung auch zur Verstellung der räumlichen Lage mehrerer an der Lenkradbaugruppe vorgesehener Funktionskomponenten zueinander (in einer Ebene senkrecht zur Lenkachse) vorgesehen sein.

Weitere Einzelheiten und Vorteile der Erfindung werden bei der nachfolgenden Beschreibung von Ausführungsbeispielen anhand der Figuren deutlich werden.

Es zeigen:
- Fig. 1A: eine schematische Querschnittdarstellung einer Lenkradbaugruppe mit einer durch Einwirkung auf ein Airbagmodul auslösbaren Hupenfunktion;
- Fig. 1 B: eine erste Abwandlung der Lenkradbaugruppe aus Figur 1A;
- Fig. 1C: eine zweite Abwandlung der Lenkradbaugruppe aus Figur 1 A;
- Fig. 2: eine Lenkradbaugruppe gemäß Figur 1B mit einer Verstelleinrichtung zur Einstellung der Lage des Airbagmodules quer zur Lenkachse;
- Fig. 3A: eine Unteransicht des Airbagmodules aus Figur 2;
- Fig. 3B: eine erste Abwandlung der Unteransicht der Figur 3A;
- Fig. 3C: eine zweite Abwandlung der Unteransicht der Figur 3A;
- Fig. 4A: eine Detaildarstellung der Lenkradbaugruppe aus Figur 2;
- Fig. 4B: eine Abwandlung der Detaildarstellung aus Figur 4A;
- Fig. 5: ein weiteres Ausführungsbeispiel einer Verstelleinrichtung zur Einstellung der Lage eines Airbagmodules quer zur Lenkachse;
- Fig. 6A: einer Einzeldarstellung einer Exzenterbuchse der in Figur 4A gezeigten Art;
- Fig. 6B: eine Unteransicht der Exzenterbuchse aus Figur 6A;
- Fig. 7A: eine Draufsicht auf ein Kraftfahrzeuglenkrad mit zwei Exzenterstiften als Elemente einer Verstelleinrichtung zur Einstellung der Lage eines Airbagmodules;
- Fig. 7B: ein Detail aus Figur 7A im Bereich eines Exzenterstiftes;
- Fig. 8: eine Abwandlung der Anordnung aus Figur 2, bei der das Lenkrad aus Figur 2 durch eine Testvorrichtung ersetzt ist.

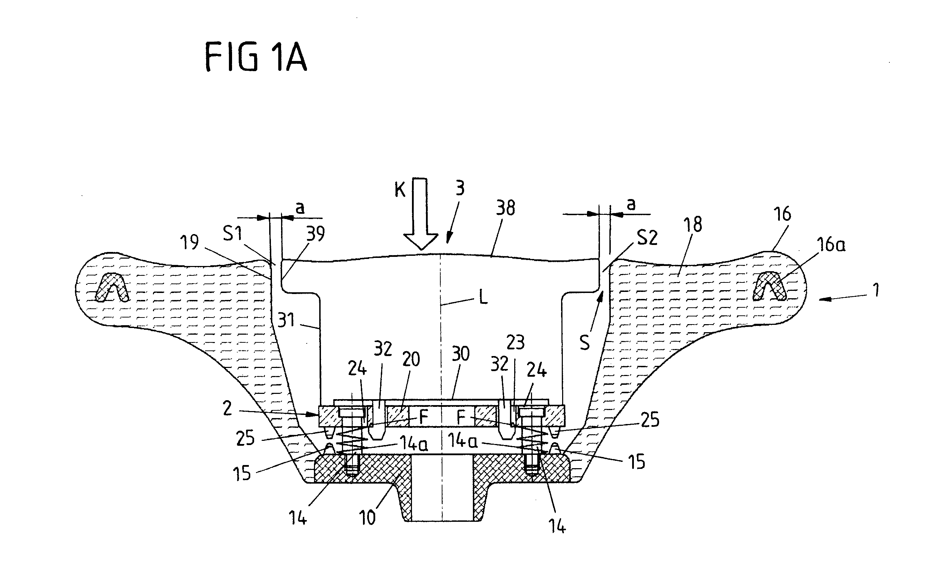

Figur 1A zeigt einen schematischen Querschnitt durch ein Kraftfahrzeuglenkrad 1 mit einer durch eine Lenkradnabe 10 gebildeten Basis, an der in bekannter Weise über Lenkradspeichen 18 ein ringförmig umlaufender Lenkradkranz 16 (mit Kranzskelett 16A) angebunden ist. Die Lenkradnabe 10 definiert eine Lenkachse L, um die das Lenkrad bei bestimmungsgemäßer Betätigung durch einen Fahrer eines Kraftfahrzeugs drehbar ist und um die sich der Lenkradkranz 16 ringförmig erstreckt.

An der durch die Lenkradnabe 10 gebildeten Basis des Lenkrades 1 ist über von der Lenkradnabe 10 abstehende Bolzen 14, die begrenzt verschieblich in zugeordnete Ausnehmungen 24 der Kontaktbrücke 2 eingreifen, und über auf den Bolzen 14 vorgesehenen Federmitteln 14a (hier in Form von als Schraubenfedern ausgeführten Druckfedern) eine Kontaktbrücke 2 entlang der Lenkachse L relativ zu der Lenkradnabe 10 begrenzt beweglich gelagert. Von der Kontaktbrücke 2 bzw. genauer deren Grundplatte 20 stehen in Richtung auf die Lenkradnabe 10 elektrische Kontaktelemente 25 ab, denen entsprechende elektrische Kontaktelemente 15 an der Lenkradnabe 10 zugeordnet sind.

Die Federmittel 14a sind derart ausgewählt und vorgespannt, dass sie im Gleichgewichtszustand (ohne zusätzliche Einwirkung äußerer Kräfte) die Kontaktbrücke 2 bzw. deren Grundplatte 20 entlang der Lenkachse L in einem solchen Abstand von der Lenkradnabe 10 halten, dass die beiderseitigen elektrischen Kontaktelemente 15, 25 nicht miteinander in Anlage geraten, also keine elektrische Kontaktierung zwischen den Kontaktelementen 15, 25 vorliegt.

An der Kontaktbrücke 2 ist ein Airbagmodul 3 festgelegt, und zwar im Ausführungsbeispiel über eine Rastverbindung, hier gebildet durch airbagmodulseitige Rasthaken 32, die in zugeordnete Rastöffnungen 23 der Kontaktbrücke 2 eingreifen und dort in bekannter Weise jeweils einen Federschenkel eines dort vorgesehenen Federelementes F untergreifen, vergleiche US-A 5,380,037.

Die Rasthaken 32 sind dabei an einem Trägerelement 30 auf der der Lenkradnabe 10 und der Kontaktbrücke 2 zugewandten Unterseite des Airbagmodules 3 vorgesehen, das z. B. durch einen Generatorträger für eine Aufblaseinrichtung des Airbagmodules gebildet sein kann.

Das Airbagmodul 3 umfasst weiterhin ein Gehäuse 31, in welchem in bekannter Weise ein zum Schutz eines Fahrzeuginsassen, hier des Fahrers eines Kraftfahrzeugs, aufblasbarer Gassack sowie gegebenenfalls eine zugeordnete Aufblaseinrichtung aufzunehmen sind. Der Gehäuseboden kann dabei durch das Trägerelement 30 gebildet werden, von dem bedarfsweise eine umlaufende seitlich Gehäusewand absteht und dem gegenüberliegend eine die Gehäuseoberseite 38 definierende Abdeckung vorgesehen ist. An der dem Fahrer zugewandten Vorderseite des Lenkrades ist zwischen einem (umlaufenden) oberen seitlichen Randabschnitt 39 des Airbagmodules 3, welcher der Lenkradnabe 10 und der Kontaktbrücke 2 abgewandt ist, und einem zum Airbagmodul 3 weisenden inneren Randabschnitt 19 der Lenkradspeichen 18 ein Spalt S ausgebildet, von dem je ein Spaltbereich S1, S2 zwischen je einer der Speichen 18 des Lenkrades und dem gegenüberliegenden oberen Randabschnitt 39 des Airbagmodules 3 liegt.

Dieser Spalt S bzw. die Spaltbereiche S1, S2, durch welche das Airbagmodul 3 im Bereich seines oberen äußeren Randes 39 von den Speichen 18 bzw. genauer deren inneren Randabschnitten 19 beabstandet ist, lassen eine Längsbewegung des Airbagmodules 3 relativ zu dem Lenkrad 1 entlang der Lenkachse L zu.

Die Längsbeweglichkeit des Airbagmodules 3 bezüglich des Lenkrades 1 ergibt sich dabei daraus, dass das Airbagmodul 3 über die vorbeschriebene Rastverbindung 23, 32, F an der Kontaktbrücke 2 festgelegt ist, welche wiederum (entlang der Lenkachse L) begrenzt axial verschieblich am Lenkrad 1 bzw. genauer dessen Nabe 10 gelagert ist.

Wird auf das Airbagmodul 3 im Bereich von dessen Oberseite 38 eine Kraft K entlang der Lenkachse L ausgeübt, insbesondere durch eine Hand eines das Lenkrad 1 bedienenden Fahrers, so werden unter der Wirkung dieser Kraft K die zwischen der am Airbagmodul 3 festgelegten Kontaktbrücke 2 und der Lenkradnabe 10 wirkenden Federmittel 14a - entgegen ihrer elastischen Vorspannung - komprimiert, so dass sich die Kontaktbrücke 2 entlang der Lenkachse L auf die Lenkradnabe 10 zu bewegt und die beiderseitigen elektrischen Kontaktelementelemente 15, 25 miteinander in elektrischen Kontakt treten. Hierdurch kann in bekannter Weise ein Signalhorn eines Kraftfahrzeugs elektrisch betätigt werden (Hupenfunktion), vergleiche DE 10 2004 010 098.

Um die hierfür erforderliche axiale Beweglichkeit des Airbagmodules 3 zusammen mit der Kontaktbrücke 2 entlang der Lenkachse L bei Ausübung einer äußeren Kraft K zu gewährleisten, ist eine hinreichende Querausdehnung a (Breite) des erwähnten Spaltes S zwischen Airbagmodul 3 und Lenkrad 1 erforderlich. Konkret sollen die Spaltmaße jenes Spaltes S bzw. der einzelnen Spaltbereiche S1, S2 so bemessen sein, dass sie auch ein geringfügiges Verkippen des Airbagmodules 3 bei einer Krafteinwirkung K zur Ausübung der Hupenfunktion zulassen, welches beispielsweise dann auftreten kann, wenn die Kraft K nicht zentrisch sondern etwas außermittig auf die Oberseite 38 des Airbagmodules 3 aufgebracht wird.

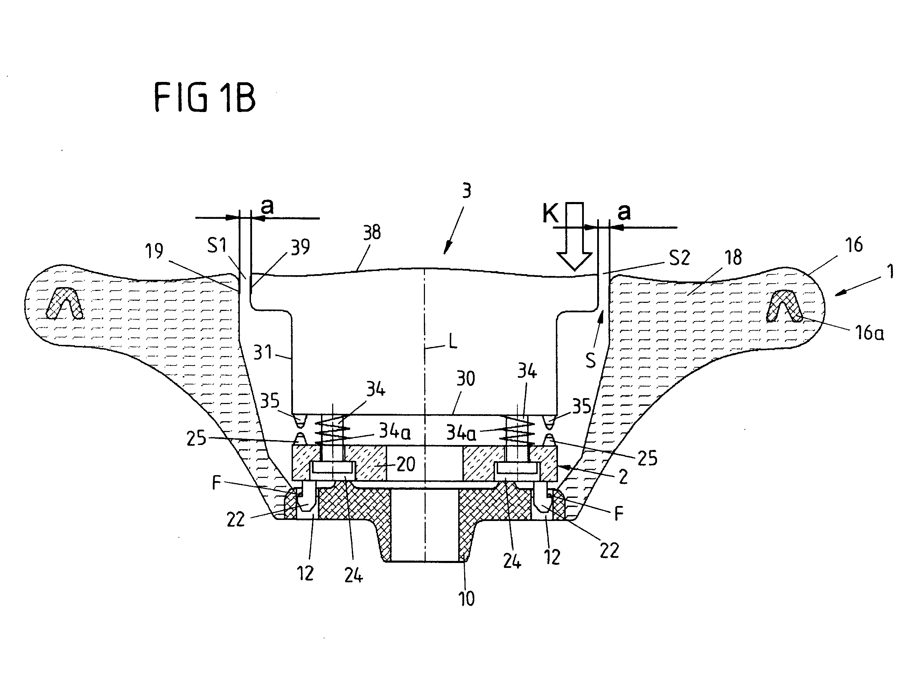

Figur 1B zeigt eine Abwandlung der Lenkradbaugruppe aus Figur 1A hinsichtlich der Anordnung der elektrischen Kontaktelemente 25, 35 zur Auslösung eines Signalhornes. Diese sind im Ausführungsbeispiel der Figur 1B einerseits an der Kontaktbrücke 2, und zwar auf der dem Airbagmodul 3 zugewandten Seite, und andererseits am Airbagmodul 3, nämlich an dessen der Kontaktbrücke 2 zugewandter Unterseite bzw. genauer am dortigen Trägerelement 30, angeordnet; und das Airbagmodul 3 ist mittels von dessen Unterseite abstehender Bolzen 34, welche entlang der Lenkachse L begrenzt verschieblich in zugeordnete Ausnehmungen 24 der Kontaktbrücke 2 eingreifen, sowie über auf den Bolzen 34 angeordnete (vorgespannte) elastische Federmittel 34a entlang der Lenkachse L bezüglich der Kontaktbrücke 2 verschieblich an letzterer gelagert. Diese ist wiederum über eine Rastverbindung, vorliegend gebildet durch kontaktbrückenseitige Rasthaken 22 und lenkradnabenseitige Rastaussparungen 12 sowie zugeordnete Schenkelfedern F am Lenkrad 1, genauer an dessen Nabe 10, festgelegt.

Zur Auslösung der Hupenfunktion erfolgt hier unter Einwirkung einer äußeren Kraft K eine Bewegung des Airbagmodules 3 relativ zu der am Lenkrad 1 festgelegten Kontaktbrücke 2 entlang der Lenkachse L, wobei die modulseitigen elektrischen Kontaktelemente 35 mit den kontaktbrückenseitigen Kontaktelementen 25 unter Deformation der Federmittel 34a in Anlage geraten.

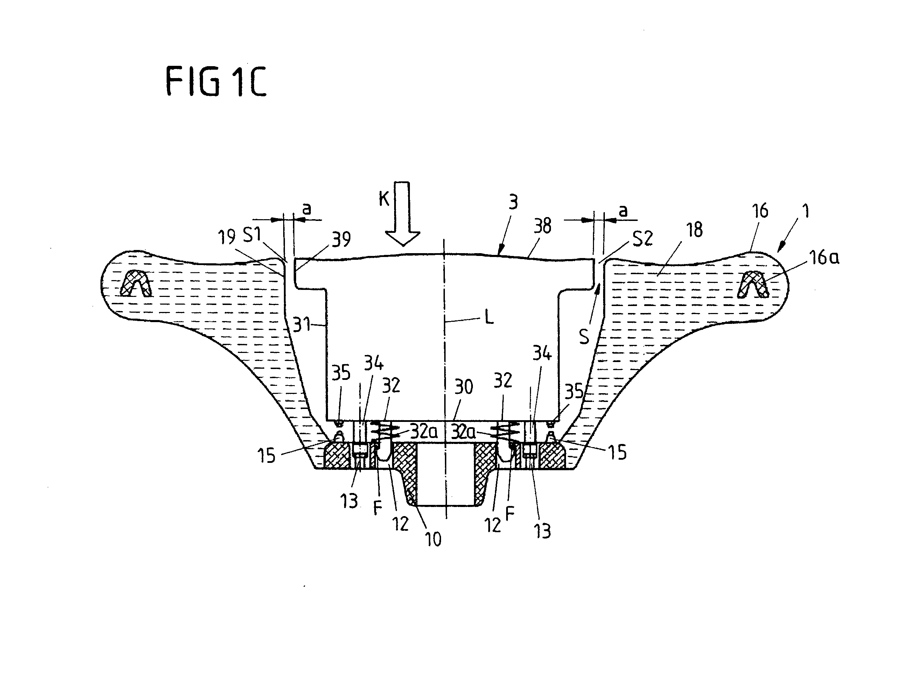

Beim Ausführungsbeispiel der Figur 1C ist ein Airbagmodul 3 entlang der Lenkachse L verschieblich unmittelbar am Körper eines Lenkrads 1, genauer dessen Lenkradnabe 10 gelagert; und es ist keine separate Kontaktbrücke zwischen Airbagmodul 3 und Lenkradnabe 10 vorgesehen, vergleiche DE 195 03 816 A1.

Hierzu sind auf den Rasthaken 32, über die das Airbagmodul 3 in zugeordnete Rastausnehmungen 12 der Lenkradnabe 1 eingreift, elastische Federmittel 32a angeordnet, welche eine begrenzte axiale Bewegung des Airbagmodules 3 relativ zu der Lenkradnabe 10 unter Komprimierung der Federmittel 32a zulassen, wobei der jeweilige Rasthaken 32 entlang der Lenkachse L in seiner jeweils zugeordneten Rastaussparung 12 verschoben wird. Zur Führung dieser Längsbewegung können zusätzlich Führungszapfen 34 von der Unterseite des Airbagmodules 3 abstehen, welche in zugeordneten Führungsöffnungen 13 der Lenkradnabe 10 geführt sind.

In diesem Fall sind die zur Auslösung der Hupenfunktion vorgesehenen elektrischen Kontaktelemente 15, 35 einerseits an der Lenkradnabe 10 und andererseits an der Unterseite des Airbagmodules 3 vorgesehen; und sie treten bei einer Krafteinwirkung K auf die Oberseite 38 des Airbagmodules 3, die zu einer Verschiebung des Airbagmodules 3 hin zur Lenkradnabe 10 (unter Komprimierung der elastischen Federmittel 32a) führt, miteinander in elektrischen Kontakt.

Bei den anhand der Figuren 1A bis 1C erläuterten Ausführungsbeispielen von Lenkradbaugruppen liegen die Maße des Spaltes S bzw. der Spaltbereiche S1, S2 zwischen dem seitlichen oberen Rand 39 des Airbagmoduls 3 und dem zugeordneten inneren Randabschnitt 19 der jeweiligen Lenkradspeiche 18, also die Spaltmaße a des Spaltes S zwischen Airbagmodul 3 und Lenkrad 1, typischerweise in der Größenordnung von etwa 1.5 mm.

Im Hinblick auf die Sichtbarkeit jenes Spaltes S für einen vor dem entsprechenden Lenkrad 1 sitzenden Fahrer wird angestrebt, dass der Unterschied zwischen den Spaltmaßen unterschiedlicher Spaltbereiche S1, S2 des Spaltes S möglichst gering ist, etwa für einander gegenüberliegende Spaltbereiche S1, S2 der in den Figuren 1A bis 1C dargestellten Art deutlich weniger als 1 mm beträgt, z. B. maximal 0.4 mm.

Hierfür ist es erforderlich, das Airbagmodul 3 unter Berücksichtigung unvermeidbarer Bauteil- und Montagetoleranzen so in seine in den Figuren 1A bis 1C gezeigte Gebrauchsposition bzw. Lage am Lenkrad 1 einzubauen bzw. genauer in einer (zentralen) Aufnahme des Lenkrades 1 anzuordnen, dass die resultierende Lenkradbaugruppe die beschriebenen Anforderungen hinsichtlich der Spaltmaße erfüllt.

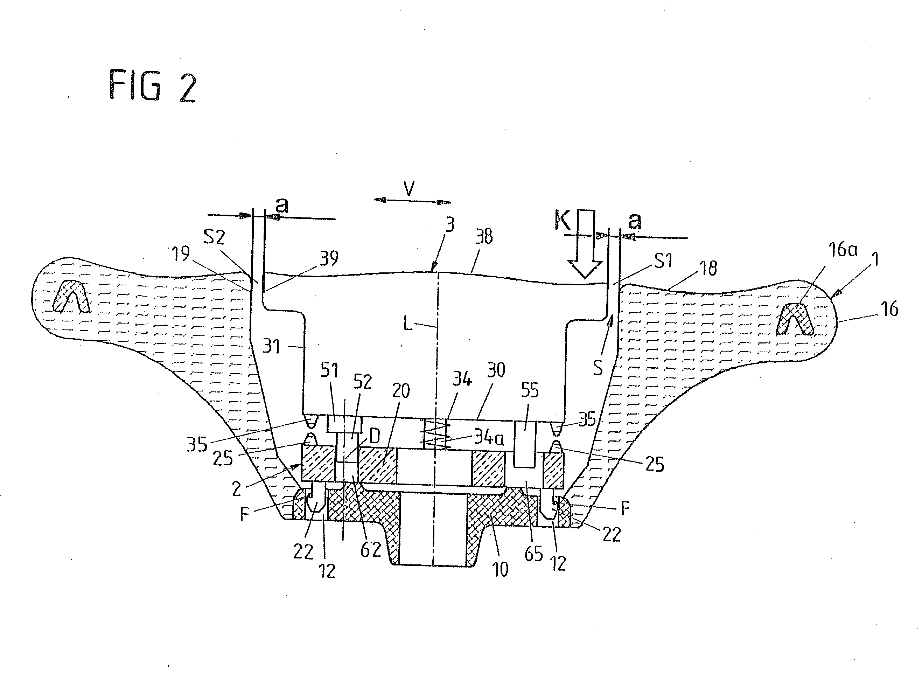

Hierzu sind gemäß Figur 2 an einer Lenkradbaugruppe der in Figur 1B gezeigten Art zusätzlich nachfolgend näher zu erläuternde Einstellmittel vorgesehen.

Konkret ist der Lenkradbaugruppe der Figur 2 eine Verstelleinrichtung 5, 6 zugeordnet, mittels der das Airbagmodul 3 in seiner Gebrauchposition quer zur Lenkachse L, vorliegend speziell entlang einer senkrecht zur Lenkachse L verlaufenden Ebene, relativ zu dem Lenkrad 1 verstellbar (justier- bzw. positionierbar) ist, um das Spaltmaß der einander gegenüberliegenden Spaltbereiche S1, S2 in der Gebrauchsposition des Airbagmodules gezielt einstellen zu können. Hiermit soll unter Ausgleich bauteil- und montagebedingter Toleranzen erreicht werden, dass die beiden einander gegenüberliegenden Spaltbereiche S1, S2 des Spaltes S bei bestimmungsgemäßer Anordnung des Airbagmodules 3 in seiner Gebrauchsposition am Lenkrad 1 dieselbe Ausdehnung a aufweisen, also jeweils denselben Abstand zwischen Lenkrad 1 und Airbagmodul 3, genauer zwischen dem inneren Endabschnitt 19 einer jeweiligen Lenkradspeiche 18 und dem zugeordneten Abschnitt des oberen äußeren Randes 39 des Airbagmodules 3, definieren.

Die Verstelleinrichtung 5, 6 umfasst vorliegend zum einen Einstellmittel 51, 52, 62 zur Erzeugung eines Verstellmomentes bzw. einer gerichteten Verstellkraft für eine Verstellung des Airbagmodules 3 und zum anderen Führungsmittel 55, 65 zu einer definierten Führung des Airbagmodules 3 während einer Verstellung.

Die Einstellmittel können grundsätzlich durch beliebige Elemente gebildet werden, mit denen eine definierte Bewegung des Airbagmodules 3 relativ zu dem Lenkrad 1 quer zur Lenkachse L erzeugbar ist, also etwa durch (quer zur Lenkachse L erstreckte) Einstellschrauben, über welche das Airbagmodul 3 mit dem Lenkrad 1 zusammenwirkt; durch Schieber, welche in verschiedenen Einstellpositionen arretierbar sind; durch ein geeignetes Getriebe usw.

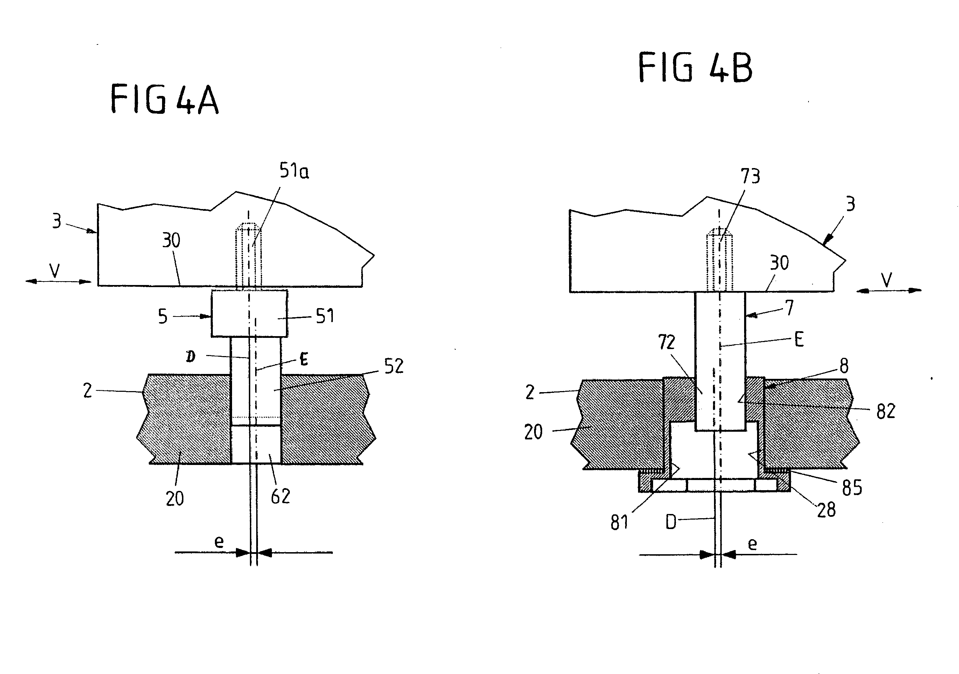

Vorliegend werden die Einstellmittel durch ein (drehbar gelagertes) Exzenterbauteil 51, 52 - nachfolgend kurz als Exzenter bezeichnet - gebildet, das von der Unterseite des Airbagmodules 3 abragt, genauer von einem an der Unterseite 3 des Airbagmodules vorgesehenen Trägerelement 30 (Generatorträger) und der einen Exzenterkörper 51 sowie ein hiervon abstehendes Führungsteil in Form eines Führungsstiftes 52 (vergl. auch Figur 4A) aufweist, der bezüglich des Exzenterkörper 51 exzentrisch versetzt angeordnet ist. Die Drehachse D des Exzenters 51, 52 verläuft dabei (ebenso wie der Führungsstift 52) parallel zur Lenkachse L und erstreckt sich mittig bezüglich des Exzenterkörpers 51, welche dadurch um die Drehachse D drehbar ist, dass er mit einem zugeordneten Gewindebolzen 51 a in einem trägerelementseitigen Innengewinde gelagert ist. Die Exzentrizität e, definiert durch den Abstand zwischen der Drehachse D und der Mittelachse E des Führungsstiftes, 52 vergl. Figur 4a, ist dabei senkrecht zur Lenkachse L gerichtet. Ein solcher aus einem Exzenterkörper 51 und einem exzentrisch hierzu angeordneten Stift 52 bestehender Exzenter wird auch als Exzenterstift bezeichnet.

Der Exzenter 51, 52 greift mit seinem Führungsstift 52 in eine zugeordnete Aufnahmeöffnung 62 (hier in Form einer Bohrung) der Kontaktbrücke 2 ein, welche den Führungsstift 52 mit einem der Funktion entsprechenden geringen Spiel umgibt, ohne eine Drehbewegung des Exzenters 51, 52 um die Drehachse D sowie eine Abwärts- und leichte Kippbewegung beim Auslösen der Hupenfunktion zu verhindern.

Wird der Exzenter 51, 52 nach dem Einbau des Airbagmodules 3 in das Lenkrad 1 bestimmungsgemäß um seine Drehachse D gedreht und dabei auch der Führungsstift 52 um seine - bezüglich der Drehachse D versetzte - Mittelachse E in der Aufnahmeöffnung 62 gedreht, so wird hierdurch - wegen des Zusammenwirkens des Exzenterkörpers 51 mit dem Trägerelement 30 des Airbagmodules 3 - eine Relativbewegung des Airbagmodules 3 bezüglich der Kontaktbrücke 2 und somit auch bezüglich des Lenkrades 1 ausgelöst, an dem ja die Kontaktbrücke 2 über eine Rastverbindung 12, 22, F festgelegt ist.

Mittels einer Führungseinrichtung 55, 65, hier gebildet durch ein vom Airbagmodul 3 bzw. genauer dessen Unterseite abragendes Führungselement 55 und eine entlang der gewünschten Verstellrichtung V erstreckte kontaktbrückenseitige Führungskulisse 65 (Langloch), in die das Führungselement 55 eingreift, wird dem Airbagmodul 3 dabei eine präzise Bewegung quer zur Lenkachse L entlang der Verbindungsstrecke zwischen den beiden Spaltbereichen S1, S1 aufgezwungen.

Hiermit lässt sich das Airbagmodul 3 entlang einer Verstellrichtung V quer zu der Lenkachse L relativ zu dem Lenkrad 1 derart verstellen, dass die beiden einander gegenüberliegenden Spaltbereiche S1, S2 in der Gebrauchsposition des Airbagmodules 3 am Lenkrad 1 (innerhalb vorgegebener, noch zulässiger Abweichungen) dieselbe Quer-Ausdehnung a (Breite) aufweisen, also an beiden Spaltbereichen S1, S2 jeweils der gleiche Abstand zwischen Lenkrad 1 und Airbagmodul 3 besteht. (Das Ausmaß der Querbewegung ist dabei insbesondere kleiner oder gleich dem konstruktiv vorgegebenen Spiel bei der Lagerung der Führungszapfen 34.)

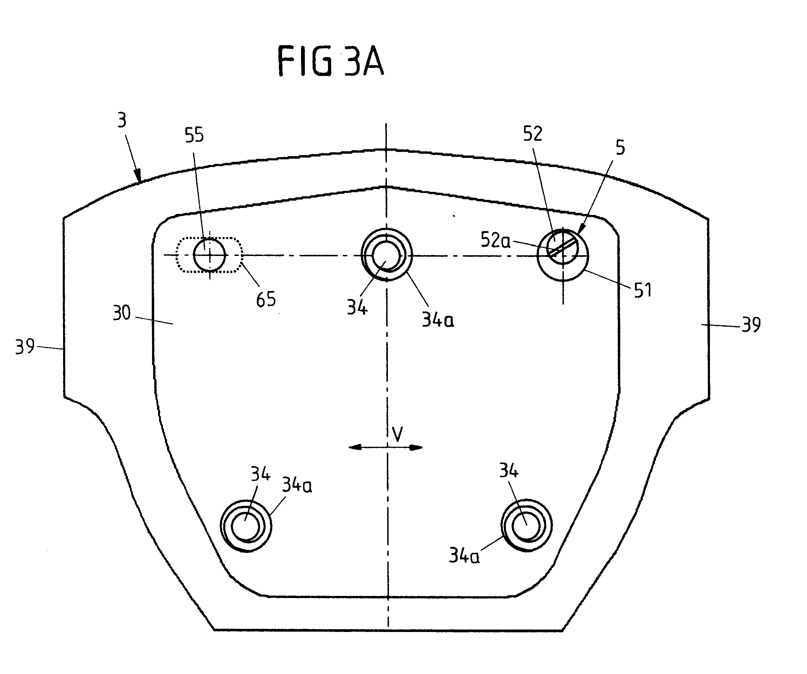

Zur Betätigung des Exzenters 51, 52, so dass dieser eine Drehbewegung um die zugeordnete Drehachse D ausführt, kann ein entsprechender Betätigungsabschnitt 52a am Exzenter 51, 52 vorgesehen sein, z. B. in Form eines Schlitzes am Führungsstift 52, vergleiche Figur 3A, die eine Unteransicht des Airbagmodules 3 aus Figur 2 zeigt, wobei die kontaktbrückenseitige Kulissenführung 65 in Form eines Langloches zusätzlich in punktierter Linie angedeutet ist.

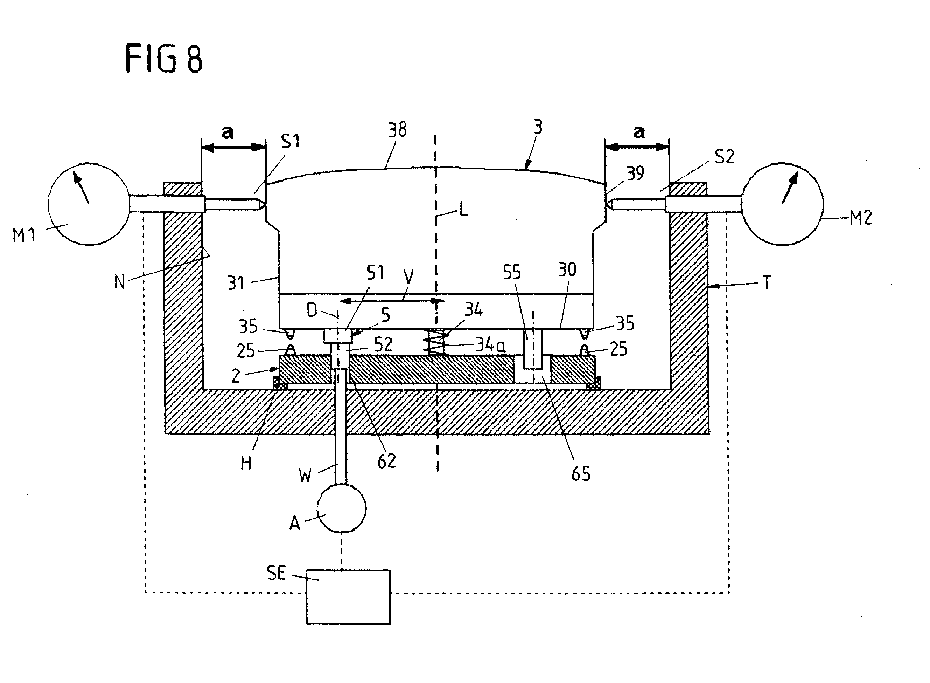

Alternativ oder ergänzend zu der Einstellung des Airbagmodules 3 bezüglich des Lenkrades 1 mittels der Verstelleinrichtung 5, 6 nach dem bestimmungsgemäßen Einbau des Airbagmodules 3 in das Lenkrad 1 kann vorgesehen sein, die Verstelleinrichtung 5, 6 bereits vor dem Zusammenbau von Airbagmodul 3 und Lenkrad 1 vorzujustieren, insbesondere unter Verwendung einer Testvorrichtung, wie sie weiter unten anhand Figur 8 beschrieben werden wird.

Konkret bezogen auf das Ausführungsbeispiel der Figuren 2 und 3A kann beispielsweise der Exzenter 51, 52 in einer Testvorrichtung T der in Figur 8 dargestellten Art so vorjustiert werden, dass das Airbagmodul 3 bezogen auf eine Aufnahme N der Testvorrichtung T entlang einer Richtung quer zur Lenkachse L optimal ausgerichtet ist, also insbesondere die in Rede stehenden Spaltbereiche S1, S2 - hier aber bezogen auf die Aufnahme N Testvorrichtung T und nicht auf ein Lenkrad - jeweils gleiche Spaltmaße a aufweisen. Sollte sich dann nach einem Einbau des entsprechenden Airbagmodules in ein Kraftfahrzeuglenkrad zeigen, dass aufgrund lenkradseitiger Toleranzen die Spaltbereiche S1, S2 in ihren Spaltmaßen stärker als zulässig voneinander abweichen, so kann dann ergänzend eine Nachjustierung mittels der Verstellvorrichtung 5, 6 vorgenommen werden.

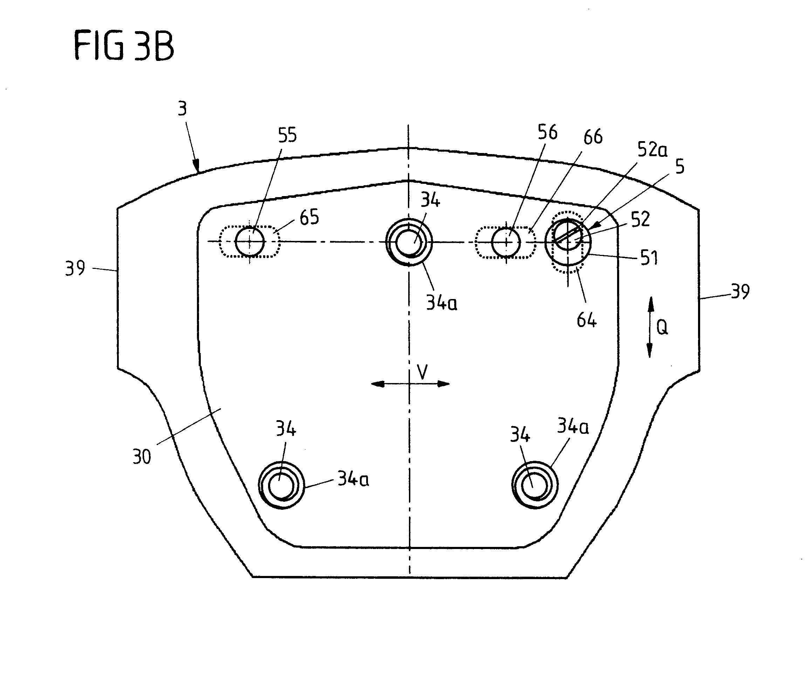

Figur 3B zeigt in einer der Figur 3A entsprechenden Unteransicht des Airbagmodules 3 eine Weiterbildung der Lenkradbaugruppe aus den Figuren 2 und 3A dahingehend, dass die Führungseinrichtung, mit der das Airbagmodul 3 gezielt entlang einer Verstellrichtung V senkrecht zur Lenkachse L geführt wird, zwei kontaktbrückenseitige Führungskulissen 65, 66 in Form je eines Langloches aufweist, in welche je ein airbagmodulseitiges Führungselement 55, 56 eingreift. Die beiden Führungskulisse 65, 66 erstrecken sich dabei jeweils entlang der Verstellrichtung V und sind im Ausführungsbeispiel entlang dieser beabstandet.

Durch diese Doppelführung des Airbagmodules 3 entlang der Verstellrichtung V wird ein Verkippen des Airbagmodules 3 um die Lenkachse L während des Einstellvorganges vermieden.

Um eine Überbestimmung zu vermeiden, ist der Exzenter 51, 52 dabei mit seinem Führungsstift 52 kontaktbrückenseitig in einer als Langloch ausgebildeten Aufnahmeöffnung 64 geführt, welches sich quer zur Verstellrichtung V an der Kontaktbrücke 2 erstreckt. Entlang der Verstellrichtung V ist der Führungsstift 52 demgegenüber im Wesentlichen spielfrei in der besagten Aufnahmeöffnung 64 aufgenommen.

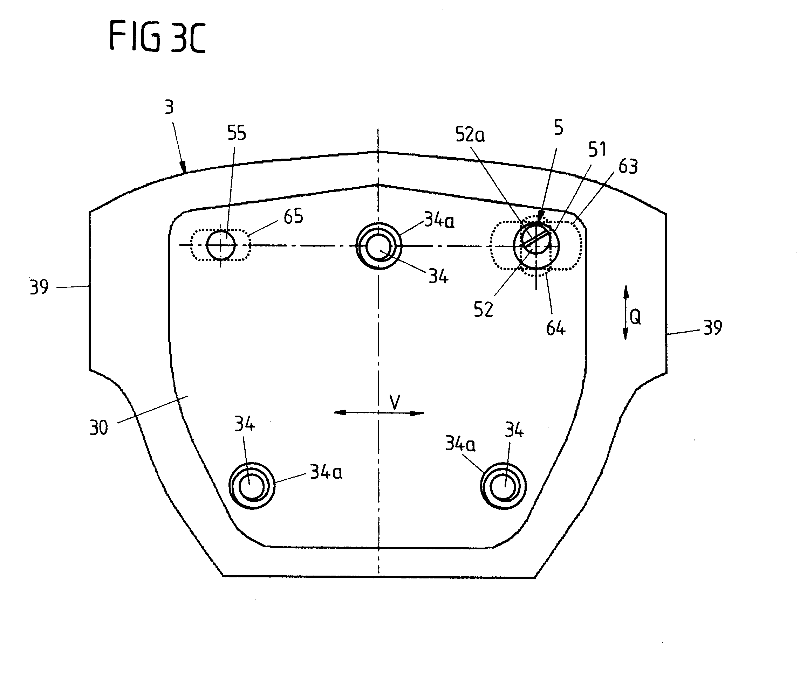

Figur 3C zeigt eine weitere Abwandlung der Anordnung aus Figur 3A, wobei hier der Exzenter 51, 52 sowohl mit seinem gelagerten Exzenterkörper 51 als auch mit dem hiervon abstehenden (exzentrisch versetzt) Führungsstift 52 jeweils in einer als Langloch ausgebildeten Aufnahme 63 bzw. 64 gelagert ist, die in entlang der Lenkachse L hintereinander angeordneten Ebenen liegen.

Der Exzenterkörper 51 des Exzenters 51, 52 ist dabei in einer Führungskulisse 63 in Form eines entlang der Verstellrichtung V erstreckten Langloches gelagert und quer zur Verstellrichtung V im Wesentlichen spielfrei hierin aufgenommen. Der Führungsstift 52 ist demgegenüber, wie im Fall der Figur 3B, in einer Aufnahmeöffnung 64 in Form eines quer zur Verstellrichtung V erstreckten Langloches geführt und dabei entlang der Verstellrichtung V spielfrei hierin aufgenommen.

Auch hiermit lässt sich bei einer Einstellung des Airbagmodules 3 bezüglich des Lenkrades 1 ein Verkippen des Airbagmodules um die Lenkachse L, vergleiche Figur 2, vermeiden.

Figur 4A zeigt noch einmal im Detail die Einstellmittel 51, 52, 62 der Verstelleinrichtung 5, 6 aus Figur 2, wobei außerdem ein vom Exzenterkörper 51 des Exzenters 51, 52 abragendes (die Drehachse D des Exzenters definierendes) Gewindestück 51 a mit dargestellt ist, über welches der Exzenter 51, 52 in ein (mit einem entsprechenden Innengewinde als Gegengewinde versehenes) Trägerelement 30 des Airbagmodules 3 eingeschraubt ist, so dass sich der Exzenter 51, 52 durch eine Schraubbewegung um seine Drehachse D drehen lässt.

Die Aufrechterhaltung einer bestimmten Drehlage des Exzenters 51, 52 bezüglich der Drehachse D lässt sich dabei z.B. durch eine hinreichende Schwergängigkeit des Gewindes, durch eine selbsthemmende Auslegung des Gewindes, durch Klebemittel oder durch eine separate Verdrehsicherung erreichen.

Figur 4B zeigt eine Abwandlung der Einstellmittel aus Figur 4A dahingehend, dass anstelle eines von dem Airbagmodul 3 abragenden Exzenters eine zugeordnete kontaktbrückenseitige Aufnahme exzentrisch ausgestaltet ist. Konkret umfassen die in Figur 4B dargestellten Einstellmittel einer Verstelleinrichtung 7, 8 einen über einen Gewindeabschnitt 73 am Airbagmodul 3 bzw. dessen Trägerelement 30 (drehfast) angeschraubten Stift 72 sowie einen zugeordneten Exzenter 8 in Form einer Exzenterbuchse, die eine den Stift 72 mit geringem Spiel und somit insbesondere drehbar aufnehmende Aufnahmeöffnung 82 aufweist. Ein sich axial hieran anschließender Abschnitt 81 der Exzenterbuchse 8, bezüglich dem die Aufnahmeöffnung 82 exzentrisch angeordnet ist, ist um eine (parallel zur Lenkachse L verlaufende) Drehachse D drehbar an der Kontaktbrücke 2, nämlich in einer Lageröffnung 28 der Kontaktbrücke 2, gelagert, so dass sich die in Figur 4B dargestellte Exzentrizität e als Abstand zwischen der Drehachse D und der Exzenterachse E ergibt. Dies entspricht der Exzentrizität e der Anordnung aus den Figuren 2 und 4A.

Durch eine Drehbewegung der Exzenterbuchse 8 um deren Drehachse D ist - wegen der Exzentrizität e von deren Aufnahmeöffnung 82 bezüglich der Drehachse D - über den in der Aufnahmeöffnung 72 vorgesehenen Stift 72 eine Verstellbewegung des Airbagmodules 3 entlang der Verstellrichtung V auslösbar - in entsprechender Weise wie im anhand der Figuren 2, 3a und 4a dargestellten Ausführungsbeispiel.

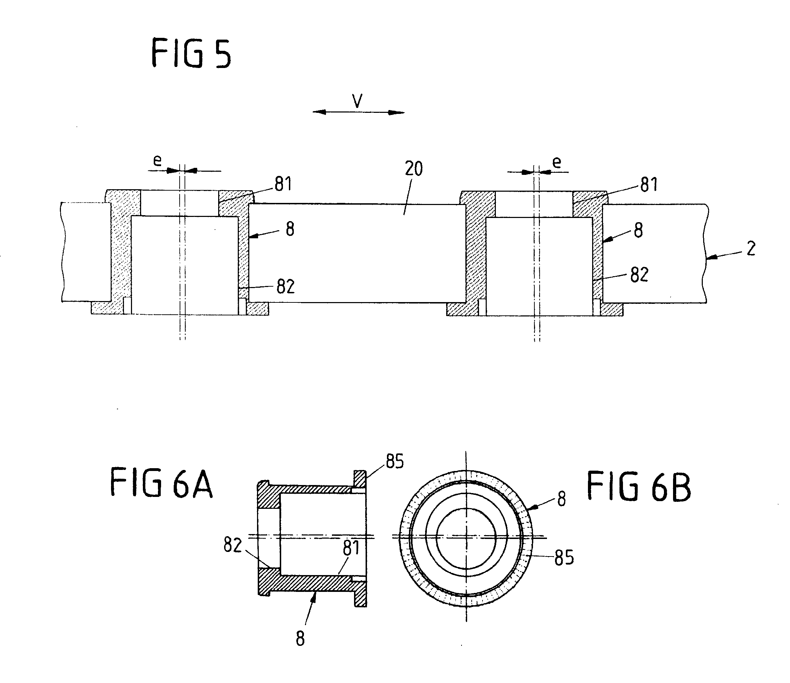

Eine bestimmte Einstellposition des Exzenters 8 in Form einer Exzenterbuchse, die einer bestimmten Position des Airbagmodules 3 entlang der Verstellrichtung V entspricht und die mit einer bestimmten Drehlage des Exzenters 8 (bezüglich der Drehachse D) einhergeht, kann dabei durch eine Verdrehsicherung 85, z. B. durch Sicherungsmittel in Form einer Verzahnung, beibehalten werden. Entsprechende Sicherungsmittel (Verzahnungselemente) können dabei an dem Exzenter 8 und/oder an der Kontaktbrücke 2 vorgesehen sein. Hinsichtlich der Anordnung der Verdrehsicherung 85 an dem Exzenter 8 in Form einer Exzenterbuchse wird ergänzend auf die Figuren 6A und 6B verwiesen.

Figur 5 zeigt zwei Exzenterbuchsen 8 der in den Figuren 4B, 6A und 6B dargestellten Art, die jeweils drehfest an einer Kontaktbrücke 2 angeordnet, z. B. in diese eingepresst sind. Mit diesen Exzenterbuchsen 8 können beispielsweise lenkradseitige (an einer Lenkradnabe vorgesehene) Stifte zusammenwirken, welche in jeweils eine Exzenterbuchse 8 bzw. genauer in deren Aufnahmeöffnung 81 eingreifen. Hierdurch ließe sich die Kontaktbrücke 2 entlang der Verstellrichtung V relativ zu dem Lenkrad 1 verstellen.

Eine solche Lösung kann insbesondere angewandt werden bei einer Lenkradbaugruppe der in Figur 1A dargestellten Art, bei der eine Kontaktbrücke 2 und ein Airbagmodul 3 (über eine Rastverbindung) fest miteinander verbunden sind und gemeinsam begrenzt (entlang der Lenkachse L) axial verschieblich bezüglich des Lenkrades 1 bzw. der Lenkradnabe 10 gelagert sind. In diesem Fall erfolgt eine Justierung der Position des Airbagmodules 3 entlang der Verstellrichtung V vorteilhaft gemeinsam mit der Kontaktbrücke 2, so dass diese beiden Komponenten 2, 3 zur Einstellung von Spaltmaßen gemeinsam relativ zu dem Lenkrad 1 verstellt werden.

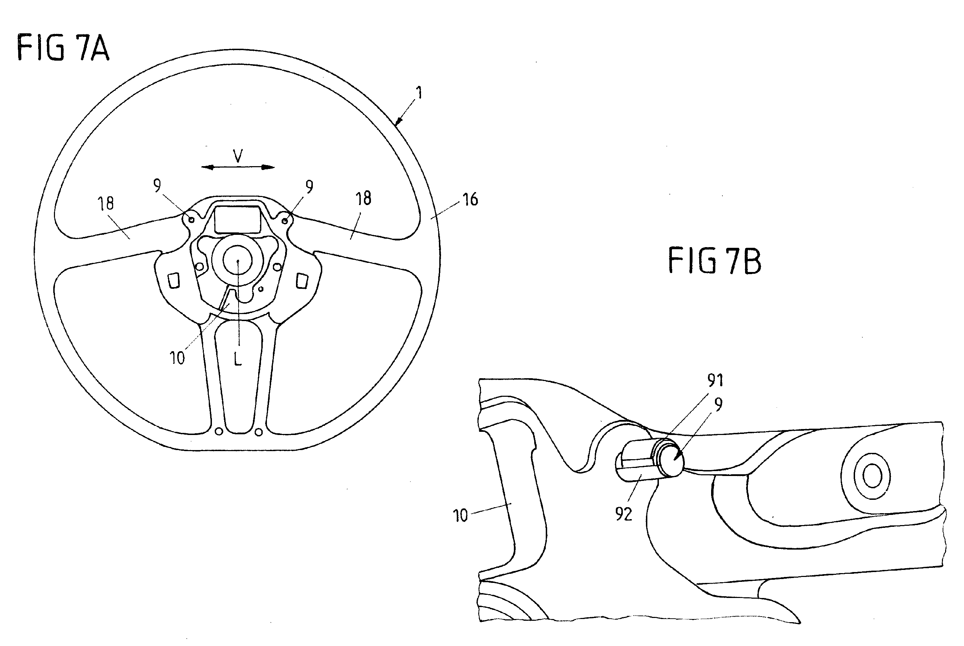

In Figur 7A ist ein Lenkrad 1 mit einer Nabe 10 und einem hiermit über Speichen 18 verbundenen Lenkradkranz 16 dargestellt, an dessen Nabe 10 zwei in der Detaildarstellung der Figur 7B besser erkennbare Exzenter 9 vorgesehen sind, die jeweils als ein (um seine Längsachse drehbar gelagerter) Stift 91 mit einem hiervon abstehenden exzentrischen Bereich 92 in Form eines Nockens ausgebildet sind.

Hiermit kann durch Zusammenwirken mit kontaktbrückenseitigen Aufnahmeöffnungen, ausgehend von einer Anordnung der in Figur 1A dargestellten Art, oder durch Zusammenwirken mit airbagmodulseitigen Aufnahmeöffnungen, ausgehend von einer Anordnung der in Figur 1C dargestellten Art ohne Kontaktbrücke, eine Verstellbewegung eines zugeordneten Airbagmodules entlang einer Verstellrichtung V senkrecht zur Längsachse L ausgelöst werden. Eine zugeordnete Führungseinrichtung zur Ausrichtung der Verstellbewegung entlang der vorgegebenen Verstellrichtung V ist dabei hier nicht mit dargestellt. Hiermit lässt sich die Einstellung der in Rede stehenden Spaltmaße lenkradseitig vornehmen, wie weiter unten beschrieben werden wird. Für die erfindungsgemäß vorgesehene Relativbewegung eines Funktionselementes (z.B. eines Airbagmodules) bezüglich eines Lenkrades ist es dabei nicht wesentlich, welche dieser beiden Baueinheiten (Lenkrad oder Airbagmodul) tatsächlich bewegt wird.

Gegebenenfalls können hierbei erste Verstellmittel 5, 6 der in Figur 2 vorgesehenen Art sowie zweite Verstellmittel 9 der in den Figuren 7A und 7B gezeigten Art additiv vorgesehen sein. D. h., es kann einerseits eine Verstellmöglichkeit des Airbagmodules 3 bezüglich der Kontaktbrücke 2 vorgesehen sein und andererseits zusätzlich eine Verstellmöglichkeit des Lenkrades 1 bezüglich der Kontaktbrücke 2 über die in den Figuren 7A und 7B gezeigten Exzenterstifte 9.

Auch die letztgenannten Exzenterstifte 9 können bereits vor dem Zusammenbau des Lenkrades 1 mit einem zugeordneten Airbagmodul vorjustiert werden, indem die Exzenterstifte 9 bezüglich einer Testvorrichtung, welche als Moduldummy ein am Lenkrad 1 anzuordnendes Airbagmodul repräsentiert, so ausgerichtet werden, dass die gewünschten Spaltmaße zwischen dem Lenkrad 1 und der das Airbagmodul repräsentierenden Testvorrichtung eingestellt sind. Nach dem Zusammenbau von Lenkrad 1 und Airbagmodul können dann noch gegebenenfalls erforderliche Nachjustierungen erfolgen.

Wie anhand der vorstehend beschriebenen Ausführungsbeispiele deutlich wurde, kann eine Verstelleinrichtung zur Positionierung eines Airbagmodules relativ zu einem Lenkrad, mit dem Ziel eines Ausgleichs von Bauteil- und Montagetoleranzen, insbesondere um bestimmte vorgegebene Spaltmaße zwischen Airbagmodul und Lenkrad einzustellen, zwischen unterschiedlichen Bestandteilen einer Lenkradbaugruppe wirken: So wirkt die Verstelleinrichtung 5, 6 aus den Figuren 2 bis 4A zwischen Airbagmodul 3 und Kontaktbrücke 2, welche wiederum am Lenkrad 1 festgelegt ist. Verstelleinrichtungen der anhand der Figuren 5, 7A und 7B gezeigten Art können demgegenüber zwischen Lenkrad 1 und Kontaktbrücke 2 (an welcher wiederum das Airbagmodul festgelegt ist) oder direkt zwischen Lenkrad 1 und Airbagmodul 3 wirken. Entscheidend ist allein, dass im Ergebnis eine Relativbewegung des Airbagmodules 3 bezüglich des Lenkrades 1 quer zur Lenkachse erreicht wird, mit dem Ziel, Spaltmaße mindestens eines Spaltes zwischen Airbagmodul und Lenkrad einzustellen.

Weiterhin kann ein Exzentermechanismus zur Bildung einer Verstelleinrichtung der vorstehend beschriebenen Art in ganz unterschiedlicher Form ausgeführt werden, ebenso wie die jeweils zugeordnete Führungseinrichtung zur Führung des Airbagmodules entlang einer vorgegebenen Verstellrichtung; und es können auch andere Mechanismen als ein Exzentermechanismus zur Auslösung einer Verstellbewegung eines Airbagmodules bezüglich eines Lenkrades genutzt werden.

Außerdem können Verstelleinrichtungen der vorstehend beschriebenen Art auch zur Positionierung anderer Komponenten einer Lenkradbaugruppe als eines Airbagmodules mit dem Ziel des Toleranzausgleichs und insbesondere der Einstellung von Spaltmaßen verwendet werden, wie etwa einer Schaltereinheit, eines Designelementes und dergleichen.

Figur 8 zeigt eine Anordnung, die hinsichtlich der Ausgestaltung des Airbagmodules 3 und der Kontaktbrücke 2 auf der Lenkradbaugruppe der Figur 1B bzw. 2 basiert. D.h., Airbagmodul 3 und Kontaktbrücke 2 sind entlang der Lenkachse L begrenzt zueinander verschieblich, um einander zugeordnete elektrische Kontaktelemente 25, 35 zur Auslösung eines Signalhorns miteinander in Kontakt bringen zu können.

Weiterhin ist das Airbagmodul 3 entsprechend der Anordnung der Figur 2 begrenzt quer zur Lenkachse L entlang einer Verstellrichtung V relativ zu der Kontaktbrücke 2 verschieblich, um bei der Lagerung des Airbagmodules 3 in einem Lenkrad 1 im Hinblick auf die Optimierung von Spaltmaßen Toleranzen ausgleichen zu können.

Der Unterschied zur Anordnung der Figur 2 besteht darin, dass die Kontaktbrücke 2 und das Airbagmodul 3 gemäß Figur 8 nicht in einem Lenkrad 1 aufgenommen sind sondern vielmehr in einer durch eine Testvorrichtung T gebildeten Aufnahme N. Hierzu ist die Kontaktbrücke 2 in eine bodenseitige Halterung H der Testvorrichtung T eingesetzt.

Die durch die Testvorrichtung T gebildete Aufnahme N umschließt dann die aus der Kontaktbrücke 2 und dem Airbagmodul 3 bestehende Baugruppe topfförmig, bis hin zu dem umlaufenden äußeren oberen Rand 39 des Airbagmoduls 3.

In der Höhe des umlaufenden oberen äußeren Randes 39 des Airbagmodules 3 sind an der Testvorrichtung T Längenmessgeräte M1, M2 positioniert, die - an denjenigen Abschnitten des oberen äußeren Randes 39 des Airbagmodules 3, die nach dessen Einbau in ein Lenkrad 1, vergleiche Figur 2, unter Bildung je eines Spaltbereiches S1, S2 inneren Randabschnitten 19 von Lenkradspeichen 18 gegenüberliegen - den Abstand a zwischen dem jeweiligen Abschnitt des oberen äußeren Randes 39 des Airbagmodules 3 und der gegenüberliegenden Innenseite der Aufnahme N messen.

Ferner umfasst die Testvorrichtung T ein Betätigungswerkzeug in Form eines Schraubwerkzeug W, das im Ausführungsbeispiel von einem mittels einer Steuereinheit SE gesteuerten Antriebsmotor A antreibbar ist und welches an einem Betätigungsabschnitt 52a, vergleiche Figur 3A, des Führungsstiftes 52 des am Airbagmodul 3 vorgesehenen Exzenters 51, 52 angreift, um diesen (durch Drehen) betätigen zu können. Hierdurch lässt sich die Position des Airbagmodules 3 in der anhand der Figuren 2, 3A und 4A beschriebenen Art und Weise entlang einer Verstellrichtung V so relativ zu der Kontaktbrücke 2 einstellen, dass die beiden Spaltbereiche S1, S2 (welche zwischen den einander gegenüberliegenden Abschnitten des äußeren oberen Randes 39 des Airbagmodules 3 und der Innenwand der Aufnahme N gebildet sind) das gleiche Spaltmaß a (im Rahmen zulässiger Abweichungen) aufweisen.

Die hierbei gewonnene Einstellung des Exzenters 51, 52 entspricht einer definierten, zentrierten Ausrichtung des Airbagmodules 3 in der Aufnahme N der Testvorrichtung T entlang der Verstellrichtung V. Mit dieser Einstellung des Exzenters 51, 52 wird das Airbagmodul 3 dann in ein Lenkrad 1 eingebaut, wie anhand Figur 2 dargestellt. Die auf die Kontaktbrücke 2 und das Airbagmodul 3 zurückgehenden Toleranzen sind zu diesem Zeitpunkt bereits durch die vorherige Ausrichtung des Airbagmodules 3 in der Testvorrichtung T ausgeglichen.

Nach dem Einbau des Airbagmodules 3 in ein Lenkrad 1 muss dann nur noch in solchen Fällen eine Nachjustage - durch Betätigung des Exzenters 51, 52 mittels einer geeigneten Betätigungsvorrichtung - erfolgen, in denen (aufgrund lenkradseitiger Toleranzen) die Spaltmaße a der relevanten Spaltbereiche S1, S2, vergleiche Figur 2, stärker voneinander abweichen sollten als nach den Vorgaben zulässig.

Alternativ kann eine solche ergänzende Spaltmaßkorrektur auch über lenkradseitige Exzenterstifte 9 erfolgen, wie in den Figuren 7A und 7B dargestellt.

## Patentansprüche

1. Lenkradbaugruppe für ein Kraftfahrzeug, mit
- einem Lenkrad (1), das um eine Lenkachse (L) drehbar an einem Kraftfahrzeug lagerbar ist, und
- einem am Lenkrad (1) in einer vorgebbaren Gebrauchsposition angeordneten Airbagmodul (3),
**gekennzeichnet durch**
eine an der Lenkradbaugruppe (1, 2, 3) angeordnete Verstelleinrichtung (5, 6; 7, 8; 9), die dazu ausgebildet und vorgesehen ist, die räumliche Lage des Airbagmoduls (3) bezüglich des Lenkrades (1) zu Zwecken des Ausgleichs von Toleranzen quer zur Lenkachse (L) zu verstellen, wobei die Verstelleinrichtung (5, 6; 7, 8; 9) Einstellmittel (51, 52, 62; 72, 81, 82; 91, 92) umfasst, mittels derer eine Verstellkraft erzeugbar ist, die zumindest eine Kraftkomponente entlang der Verstellrichtung (V) des Airbagmoduls (3) aufweist, und wobei die Verstelleinrichtung (5, 6; 7, 8; 9) darüber hinaus eine Führungseinrichtung (51, 63; 55, 65; 56, 66) umfasst, mit der das Airbagmodul (3) entlang seiner Verstellrichtung (V) geführt ist.

2. Lenkradbaugruppe nach Anspruch 1, **dadurch gekennzeichnet, dass** das Lenkrad (1) eine Aufnahme für das Airbagmodul (3) definiert, wobei das Airbagmodul (3) an dem Lenkrad (1) unter Bildung mindestens eines Spaltes (S) zwischen dem Lenkrad (1) und dem Airbagmodul (3) angeordnet ist.

3. Lenkradbaugruppe nach Anspruch 2, **dadurch gekennzeichnet, dass** die Verstelleinrichtung (5, 6; 7, 8; 9) dazu ausgebildet und vorgesehen ist, ein durch den Spalt (S) definiertes Spaltmaß (a) auf einen vorgebbaren Wert einzustellen.

4. Lenkradbaugruppe nach Anspruch 2 oder 3, **dadurch gekennzeichnet, dass** das Airbagmodul (3) von dem Lenkrad (1) an mindestens zwei räumlich voneinander beabstandeten Spaltbereichen (S1, S2) getrennt ist, wobei die Verstelleinrichtung (5, 6; 7, 8; 9) dazu eingerichtet ist, die Spaltmaße (a) der beiden Spaltbereiche (S1, S2) so einzustellen, dass diese in Übereinstimmung gebracht werden.

5. Lenkradbaugruppe nach einem der vorhergehenden Ansprüche, **dadurch gekennzeichnet, dass** die Verstelleinrichtung (5, 6; 7, 8; 9) bereits vor der Anordnung des Airbagmoduls (3) am Lenkrad (1) betätigbar ist, um eine Vorjustage der Verstelleinrichtung (5, 6; 7, 8; 9) vor der Anordnung des Airbagmoduls (3) an einem Lenkrad (1) vornehmen zu können.

6. Lenkradbaugruppe nach einem der vorhergehenden Ansprüche, **dadurch gekennzeichnet, dass** die Einstellmittel ein Exzenterbauteil (51, 52; 81, 82; 91, 92) aufweisen, wobei das Exzenterbauteil (51, 52; 81, 82; 91, 92) eine Exzentrizität (e) aufweist, die quer zur Lenkachse (L) gerichtet ist, und wobei das Exzenterbauteil (51, 52; 81, 82; 91, 92) um eine parallel zur Lenkachse (L) verlaufende Drehachse (D) drehbar gelagert ist.

7. Lenkradbaugruppe nach Anspruch 6, **dadurch gekennzeichnet, dass** das Exzenterbauteil (51, 52; 81, 82; 91, 92) dazu eingerichtet ist, eine Verstellkraft mit einer Kraftkomponente entlang der Verstellrichtung (V) des Airbagmoduls (3) zu erzeugen, indem das Exzenterbauteil (51, 52; 81, 82; 91, 92) um eine Drehachse (D) gedreht wird oder indem das Exzenterbauteil (81, 82; 91, 92) ein drehbares Element exzentrisch lagert.

8. Lenkradbaugruppe nach Anspruch 7, **dadurch gekennzeichnet, dass** das Exzenterbauteil (51, 52) einen Exzenterkörper (51), über den das Exzenterbauteil (51, 52) um eine Drehachse (D) drehbar gelagert ist, und ein exzentrisch bezüglich der Drehachse (D) angeordnetes Führungsteil (52) aufweist, um bei einer Drehbewegung des Exzenters (51, 52) eine Verstellkraft mit einer Kraftkomponente entlang der Verstellrichtung (V) des Airnagmoduls (3) zu erzeugen.

9. Lenkradbaugruppe nach Anspruch 7, **dadurch gekennzeichnet, dass** das Exzenterbauteil (81, 82) eine exzentrisch bezüglich seiner Drehachse (D) angeordnete Aufnahmeöffnung (82) aufweist, in der ein Element (72) lagerbar ist, über das die vom Exzenterbauteil (81, 82) bei einer Drehbewegung erzeugte Verstellkraft in das zu verstellende Airbagmodul (3) einleitbar ist.

10. Lenkradbaugruppe nach einem der vorhergehenden Ansprüche, **dadurch gekennzeichnet, dass** die Führungseinrichtung (51, 63; 55, 65; 56, 66) eine Führungsbahn definiert, entlang der dem Airbagmodul (3) bei Betätigung der Einstellmittel (51, 52, 62; 72, 81, 82; 91, 92) eine Bewegung aufgezwungen wird.

11. Lenkradbaugruppe nach einem der vorhergehenden Ansprüche, **dadurch gekennzeichnet, dass** die Führungseinrichtung mindestens eine Führungskulisse (63, 65, 66) aufweist, in der ein zugeordnetes Führungselement (51, 55, 56) entlang der Verstellrichtung (V) geführt ist.

12. Lenkradbaugruppe nach Anspruch 11, **dadurch gekennzeichnet, dass** mindestens zwei voneinander beabstandete Führungskulissen (63, 65, 66) vorgesehen sind.

13. Lenkradbaugruppe nach einem der vorhergehenden Ansprüche, **dadurch gekennzeichnet, dass** der Verstelleinrichtung (7, 8) Verriegelungsmittel (85) zugeordnet sind, mit denen die Verstelleinrichtung (7, 8) in einer jeweiligen Einstellposition arretierbar ist.

14. Lenkradbaugruppe nach einem der Ansprüche 6 bis 9 und Anspruch 13, **dadurch gekennzeichnet, dass** die Verriegelungsmittel (51 a, 85) zur Arretierung einer Drehlage des Exzenters (51, 52; 81, 82) vorgesehen sind.

15. Lenkradbaugruppe nach einem der vorhergehenden Ansprüche, **dadurch gekennzeichnet, dass** das Airbagmodul (3) über eine Kontaktbrücke (2) am Lenkrad (1) gelagert ist, wobei das Airbagmodul (3) entlang der Verstellrichtung (V) quer zur Lenkachse (L) gemeinsam mit der Kontaktbrücke (2) oder relativ zu der Kontaktbrücke (2) verstellbar ist.

## Claims

1. Steering wheel assembly for a motor vehicle with
- a steering wheel (1) that can be mounted rotatably about a steering axle (L) on a motor vehicle, and
- an airbag module (3) disposed in a pre-determinable use position on the steering wheel (1)
**characterized by**
an adjusting device (5, 6; 7,8; 9) disposed on the steering wheel assembly (1, 2, 3) said adjusting device being adapted and provided for adjusting the spatial position of the airbag module (3) relative to the steering wheel (1) for the purposes of compensating for tolerances perpendicular to the steering axle (L), wherein the adjusting device (5, 6; 7, 8; 9) comprises adjusting means (51, 52, 62; 72, 81, 82; 91, 92) for generating an adjusting force that has at least one force component along the adjusting direction (V) of the airbag module (3), and wherein the adjusting device (5, 6; 7, 8; 9) comprises furthermore a guiding device (51, 63; 55, 65; 56, 66) for guiding the airbag module (3) along the adjustment direction (V) thereof.

2. Steering wheel assembly according to claim 1, **characterized in that** the steering wheel (1) defines a receptacle for the airbag module (3), wherein the airbag module (3) is disposed on the steering wheel (1) by forming at least one gap (S) between the steering wheel (1) and the airbag module (3).

3. Steering wheel assembly according to claim 2, **characterized in that** the adjusting device (5, 6; 7, 8; 9) is being adapted and provided to adjust the dimension of the gap (a) defined by the gap (S) to a pre-determinable value.

4. Steering wheel assembly according to claim 2 or 3, **characterized in that** the airbag module (3) is separated from the steering wheel (1) on at least two gap areas (S1, S2) being spatially distanced from each other, wherein the adjusting device (5, 6; 7, 8; 9) is designed such that the gap dimensions (a) of the two gap areas (S1, S2) are adjusted such that they are brought in correlation to each other.

5. Steering wheel assembly according to one of the preceding claims, **characterized in that** the adjusting device (5, 6; 7, 8; 9) can be already operated before the positioning of the airbag module (3) on the steering wheel (1) in order to be able to carry out a pre-adjustment of the adjusting device (5, 6; 7, 8; 9) before the positioning of the airbag module (3) on a steering wheel (1).

6. Steering wheel assembly according to one of the preceding claims **characterized in that** the adjusting means have an excentric component (51, 52; 81, 82; 91, 92), wherein the excentric component (51, 52; 81, 82; 91, 92) has an eccentricity which is directed perpendicular to the steering axle (L), and wherein the excentric component (51, 52; 81, 82; 91, 92) is rotatably mounted on a rotation axle (D) continuing parallel to the steering axle (L).

7. Steering wheel assembly according to claim 6, **characterized in that** the excentric component (51, 52; 81, 82; 91, 92) is provided for generating an adjusting force with at least one force component along the adjusting direction (V) of the airbag module (3) by rotating the excentric component (51, 52; 81, 82; 91; 92) around a rotation axle (D) or by resting the excentric component (81, 82; 91, 92) as a rotatable element.

8. Steering wheel assembly according to claim 7, **characterized in that** the excentric component (51, 52) has an excentric body (51) via which the excentric component (51, 52) is rotatably mounted around a rotation axle (D) and a guiding part (52) arranged excentrically relatively to the rotation axle (D) for generating an adjusting force with a force component along the adjusting direction (V) of the airbag module (3) during a rotational movement of the eccentric (51, 52).

9. Steering wheel according to claim 7, **characterized in that** the excentric component (81, 82) has a receiving opening (82) arranged excentrically relative to its rotation axle (D) in which an element (72) is mounted, via which the adjusting force generated by the excentric component (81, 82) during a rotational movement can be guided into the airbag module (3) to be adjusted.

10. Steering wheel assembly according to one of the preceding claims, **characterized in that** the guiding device (51, 63; 55, 65; 56, 66) defines a guiding path along which a movement is imposed onto the airbag module (3) when operating the adjusting means (51, 52, 62; 72, 81, 82; 91, 92).

11. Steering wheel assembly according to one of the preceding claims, **characterized in that** the guiding device has at least a guiding connecting member (63, 65, 66) into which an assigned guiding element (51, 55, 56) is inserted along the adjustment direction (V).

12. Steering wheel assembly according to claim 11, **characterized in that** at least two guiding connecting members (63, 65, 66) being distanced from each other are provided.

13. Steering wheel assembly according to one of the preceding claims, **characterized in that** a locking means (85) is assigned to the adjusting device (7, 8) with which the adjustment direction adjusting device (7, 8) can be locked in a respective setting position.

14. Steering wheel assembly according to one of the claims 6 to 9 and claim 13, **characterized in that** the locking means (51a, 85) are provided for locking a rotational position of the eccentric (51, 52; 81, 82).

15. Steering wheel assembly according to one of the preceding claims, characerized in that the airbag module (3) is mounted on the steering wheel (1) via a contact bridge (2), wherein the airbag module (3) is adjustable along the adjustment direction (V) across to the to the steering axle (L) together with the contact bridge (2) or relatively to the contact bridge (2).

## Revendications

1. Ensemble de volant pour un véhicule automobile, comportant
- un volant de direction (1), qui peut être logé sur un véhicule automobile de façon à pouvoir tourner autour d'un axe de direction (L), et
- un module de coussin gonflable (3), disposé sur le volant de direction (1), dans une position d'utilisation prédéfinissable,
**caractérisé par** un dispositif de réglage (5, 6 ; 7, 8 ; 9), disposé contre l'ensemble de volant (1, 2, 3), qui est configuré et prévu de façon à régler, perpendiculairement à l'axe de direction (L), la position spatiale du module de coussin gonflable (3) par rapport au volant de direction (1) à des fins de compensation de tolérances, le dispositif de réglage (5, 6 ; 7, 8 ; 9) comprenant des moyens d'ajustement (51, 52, 62 ; 72, 81, 82 ; 91, 92), à l'aide desquels une force de réglage peut être produite, qui présente au moins une composante de force le long de la direction de réglage (V) du module de coussin gonflable, et le dispositif de réglage (5, 6 ; 7, 8 ; 9) comprenant en outre un dispositif de guidage (51, 63 ; 55, 65 ; 56, 66), à l'aide duquel le module de coussin gonflable (3) est guidé le long de sa direction de réglage (V).

2. Ensemble de volant selon la revendication 1, **caractérisé en ce que** le volant de direction (1) définit un logement pour le module de coussin gonflable (3), le module de coussin gonflable (3) étant disposé contre le volant de direction (1), en formant au moins une fente (S) entre le volant de direction (1) et le module de coussin gonflable (3).

3. Ensemble de volant selon la revendication 2, **caractérisé en ce que** le dispositif de réglage (5, 6 ; 7, 8 ; 9) est configuré et prévu de façon à ajuster à une valeur pouvant être prédéfinie une dimension de fente (a), définie par la fente (S).

4. Ensemble de volant selon la revendication 2 ou 3, **caractérisé en ce que** le module de coussin gonflable (3) est séparé du volant de direction (1) au moins au niveau de deux zones de fente (S1, S2), spatialement écartées l'une de l'autre, le dispositif de réglage (5, 6 ; 7, 8 ; 9) étant arrangé de façon à ajuster les dimensions de fente (a) des deux zones de fente (S1, S2), de façon à mettre ces dernières en concordance.

5. Ensemble volant selon l'une des revendications précédentes, **caractérisé en ce que** le dispositif de réglage (5, 6 ; 7, 8 ; 9) peut être manoeuvré avant la disposition du module de coussin gonflable (3) contre le volant de direction (1), pour pouvoir procéder à un pré-alignement du dispositif de réglage (5, 6 ; 7, 8 ; 9) avant la disposition du module de coussin gonflable (3) contre un volant de direction (1).

6. Ensemble de volant selon l'une des revendications précédentes, **caractérisé en ce que** les moyens d'ajustement comprennent un composant excentrique (51, 52 ; 81, 82 ; 91, 92), le composant excentrique (51, 52 ; 81, 82 ; 91, 92) présentant une excentricité (e) qui est dirigée perpendiculairement à l'axe de direction (L), et le composant excentrique (51, 52 ; 81, 82 ; 91, 92) étant logé en rotation autour d'un axe de rotation (D) s'étendant parallèlement à l'axe de direction (L).

7. Ensemble volant selon la revendication 6, **caractérisé en ce que** le composant excentrique (51, 52 ; 81, 82 ; 91, 92) est arrangé de façon à produire une force de réglage présentant une composante de force le long de la direction de réglage (V) du module de coussin gonflable (3), le composant excentrique (51, 52 ; 81, 82 ; 91, 92) étant mis en rotation autour d'un axe de rotation (D), ou le composant excentrique (81, 82 ; 91, 92) supportant d'une manière excentrique un élément tournant.

8. Ensemble de volant selon la revendication 7, **caractérisé en ce que** le composant excentrique (51, 52) comprend un corps d'excentrique (51), par lequel le composant excentrique (51, 52) est logé en rotation autour d'un axe de rotation (D), ainsi qu'une pièce de guidage (52), disposée d'une manière excentrée par rapport à l'axe de rotation (D), pour produire, lors d'un mouvement de rotation de l'excentrique (51, 52), une force de réglage ayant une composante de force le long de la direction de réglage (V) du module de coussin gonflable (3).

9. Ensemble de volant selon la revendication 7, **caractérisé en ce que** le composant excentrique (81, 82) comprend une ouverture (82) formant logement, disposée d'une manière excentrée par rapport à son axe de rotation (D), ouverture dans laquelle peut être logé un élément (72) par l'intermédiaire duquel la force de réglage produite par le composant excentrique (81, 82) lors d'un mouvement de rotation peut être appliquée au module de coussin gonflable (3) devant être réglé.

10. Ensemble de volant selon l'une des revendications précédentes, **caractérisé en ce que** le dispositif de guidage (51, 63 ; 55, 65 ; 56, 66) définit un chemin de guidage, le long duquel un mouvement est appliqué à force au module de coussin gonflable (3) lors de la manoeuvre des moyens d'ajustement (51, 52, 62 ; 72, 81, 82 ; 91, 92).

11. Ensemble de volant selon l'une des revendications précédentes, **caractérisé en ce que** le dispositif de guidage comprend au moins une coulisse de guidage (63, 65, 66), dans laquelle est guidé un élément de guidage correspondant (51, 55, 56) le long de la direction de réglage (V).

12. Ensemble de volant selon la revendication 11, **caractérisé en ce que** sont prévues au moins deux coulisses de guidage (63, 65, 66) disposées à distance l'une de l'autre.

13. Ensemble de volant selon l'une des revendications précédentes, **caractérisé en ce que** des moyens de verrouillage (85), à l'aide desquels le dispositif de réglage (7, 8) peut être bloqué dans une position d'ajustement correspondante, sont assignés au dispositif de réglage (7, 8).

14. Ensemble de volant selon l'une des revendications 6 à 9 et la revendication 13, **caractérisé en ce que** les moyens de verrouillage (51a, 85) sont prévus pour bloquer une position en rotation de l'excentrique (51, 52 ; 81, 82).

15. Ensemble de volant selon l'une des revendications précédentes, **caractérisé en ce que** le module de coussin gonflable (3) est, par l'intermédiaire d'un pont de contact (2), logé contre le volant de direction (1), le module de coussin gonflable (3) pouvant être réglé le long de la direction de réglage (V), perpendiculairement à l'axe de direction (L), en même temps que le pont de contact (2), ou par rapport au pont de contact (2).
